# FASCICULE DE BREVET EUROPEEN

(11) **EP 1 497 873 B1**
(45) Date de publication et mention de la délivrance du brevet: **04.10.2006**
(21) Numéro de dépôt: 03744387.6
(22) Date de dépôt: 19.03.2003
(51) Int. Cl.: H01M 2/16

(54) **SEPARATEUR POUR ACCUMULATEURS ELECTRIQUES SECONDAIRES RECOMBINAISON DES GAZ**
TRENNGLIED FÜR ELEKTRISCHE SEKUNDÄRAKKUMULATOREN MIT GASREKOMBINATION
SEPARATOR FOR SECONDARY ELECTRICAL ACCUMULATORS WITH GAS RECOMBINATION

(30) Priorité: 20.03.2002 LU 90901
(43) Date de publication de la demande: 19.01.2005
(73) Titulaire: Amer-Sil S.A., 8287 Kehlen (LU)
(72) Inventeur: LAMBERT, Urbain, 8323 CAPELLEN (LU)
(74) Mandataire: Kihn, Pierre Emile Joseph
(86) Numéro de dépôt international: PCT/EP2003/050072
(87) Numéro de publication internationale: WO 2003/079465

(56) Documents cités:
- EP-A- 0 618 629
- WO-A-94/20995
- WO-A-98/47192
- WO-A-98/52240
- WO-A-99/67831
- US-A- 3 351 495
- US-A- 3 696 061
- US-A- 4 335 193
- PATENT ABSTRACTS OF JAPAN vol. 1998, no. 06, 30 avril 1998 (1998-04-30) -& JP 10 031991 A (NIPPON MUKI CO LTD), 3 février 1998 (1998-02-03)
- ANONYMOUS: "Amer-sil microporous pvc/silica seperators" AMER-SIL SEPARATORS-GAUNTLETS, [en ligne] XP002229331 Extrait de l'Internet: <URL:http://amer-sil.com> [extrait le 2003-01-29]
- V. TONIAZZO: "New separators for industrial and specialty lead acid batteries" JOURNAL OF POWER SOURCES, vol. 107, no. 2, 30 avril 2002 (2002-04-30), pages 211-216, XP002229332

## Description

La présente invention concerne des séparateurs absorbants pour accumulateurs électriques secondaires et en particulier pour des batteries au plomb-acide régulées par une vanne.

Les accumulateurs électriques au plomb-acide sont utilisés pour emmagasiner l'énergie électrique sous forme chimique.

Ce type d'accumulateur peut être chargé et déchargé plusieurs fois, certains accumulateurs peuvent livrer plusieurs centaines ou même milliers de cycles de charge - décharge avant que la quantité d'énergie électrique fournie lors de la décharge soit trop basse selon les normes en vigueur. Normalement ce seuil de performance électrique se situe à 80% de la capacité nominale de l'accumulateur.

L'entretien d'un accumulateur électrique au plomb-acide classique consiste à remplacer l'eau qui est perdue par électrolyse, évaporation et corrosion de la grille positive.

Pour éliminer cet entretien, on a développé l'accumulateur régulé par une vanne qui est aussi connu sous le nom d'accumulateur à recombinaison des gaz. Ce type d'accumulateur permet de réduire considérablement les pertes d'eau et ceci grâce à la recombinaison de l'oxygène qui se fait dans l'accumulateur vers la fm du cycle de recharge.

L'oxygène est formé par électrolyse de l'eau vers la fin de la recharge sur les plaques positives. Ce gaz remplit l'accumulateur et migre vers les plaques négatives. L'oxygène est réduit sur la surface de celles-ci et est ensuite combiné à l'hydrogène présent sous forme de protons pour reformer des molécules d'eau.

La réduction de l'oxygène est possible parce que l'accumulateur est muni d'une vanne qui empêche l'oxygène de s'échapper de l'accumulateur et qui maintient une pression légèrement supérieure à la pression atmosphérique à l'intérieur de l'accumulateur. Cette surpression à l'intérieur de l'accumulateur empêche également les gaz atmosphériques d'entrer dans l'accumulateur.

Les accumulateurs régulés par une vanne sont de deux types, selon le système d'immobilisation de l'électrolyte.
(i) Si l'électrolyte (acide sulfurique) est gélifié par ajout de silice pyrogène, la batterie est appelée « batterie gel » et comprend des séparateurs polymères flexibles et microporeux en forme de feuilles, présentant des côtes ou des ondulations. Les séparateurs sont placés entre des plaques de polarité opposée. Dans ce cas, le transfert d'oxygène se produit par les micro-fissures qui se forment dans le gel, puis par les pores du séparateur.
(ii) Si l'électrolyte liquide est absorbé dans les pores d'un séparateur en micro-fibres de verre, les accumulateurs sont appelés « batteries AGM » (AGM pour Absorptive Glass Material). Ces séparateurs absorbent et retiennent l'électrolyte liquide dans leurs pores, grâce aux forces capillaires résultant de l'enchevêtrement des microfibres de verre. Ainsi, les séparateurs retiennent l'électrolyte à proximité des plaques indépendamment de la position de l'accumulateur. Le taux de saturation des pores du séparateur absorbant par l'électrolyte doit être inférieur à 100% puisqu'il faut des espaces libres pour que l'oxygène puisse traverser le séparateur en allant des plaques positives vers les plaques négatives.

Dans ces deux types de technologies, les séparateurs jouent un rôle très important dans le recyclage de l'oxygène puisqu'ils permettent un transfert plus ou moins efficace de l'oxygène des plaques positives aux plaques négatives, grâce à une structure interne micro-poreuse plus ou moins bien adaptée à ce transport de gaz.

Traditionnellement, les séparateurs pour batteries gel sont des feuilles polymères rigides et microporeuses présentant des côtes ou des ondulations. Les deux plus courants sont les séparateurs constitués d'un voile de polyester recouvert d'une résine phénolique (US patent 3,622,393) et les séparateurs microporeux constitués d'un mélange de PVC et de silice (US patent 3,696,061). Cependant, ces séparateurs présentent des porosités volumiques sans déformation ou à plat qui sont comprises entre 67 % et 72% et des tailles de pores nettement inférieures à 2 µm dans le cas du séparateur PVC. Le produit commercialisé par Amer-Sil SA sous la dénomination DC HP 340 en est un exemple. Dans le cas des séparateurs précédents à base de PVC, le seul moyen d'augmenter légèrement le volume et la taille des pores d'extraction, était de passer par une étape supplémentaire de « corrugation » d'un séparateur plat afin d'obtenir un séparateur ondulé.

Ces deux conditions - porosité totale et taille des pores - se sont avérées non optimales pour améliorer le transfert et la recombinaison de l'oxygène, et par conséquent les performances électriques des batteries à recombinaison de gaz.

Les séparateurs absorbants pour batteries AGM sont traditionnellement constitués essentiellement d'un non-tissé en fibres ayant une certaine capacité pour retenir l'électrolyte. Ces fibres sont mouillables rapidement et complètement avec un électrolyte acide aqueux.

Différents mélanges de fibres ont été utilisés dans le passé comme p.ex. des mélanges de fibres de verre grossières et de fibres de verre fines avec ou sans fibres organiques. Les fibres sont utilisées en de telles proportions qu'elles retiennent une quantité suffisante d'électrolyte. Ainsi, le brevet US 4,465,748 décrit des séparateurs en fibres de verre comprenant entre 5 et 35% en poids de fibres de verre de moins de 1 micron de diamètre, le reste des fibres ayant des diamètres supérieurs, généralement compris entre 2 et 5 microns.

Ces séparateurs en fibres sont facilement écrasés pendant leur montage dans la batterie. Une fois comprimés, les séparateurs en fibres ne reviennent pas à leur épaisseur initiale. Ils subissent également une perte non négligeable d'épaisseur lors du remplissage des batteries, à mesure qu'ils sont saturés d'acide sulfurique. De plus, au cours des cycles de charge et décharge de la batterie AGM, les expansions et rétractions alternatives des masses actives positives et négatives exercent sur le séparateur en fibres de verre diverses forces de compression qui altèrent ses propriétés mécaniques et provoquent une diminution irréversible d'épaisseur, ce qui aboutit généralement à une perte partielle du contact entre les plaques et le séparateur, seul réservoir d'acide. La conséquence immédiate est une diminution des échanges ioniques et une perte de capacité importante et définitive de la batterie.

Le but de la présente invention est de proposer un séparateur polymère microporeux pour batteries présentant des meilleures propriétés en relation avec la compression et présentant des coûts de production abordables. L'invention propose donc un séparateur plat et absorbant pour accumulateurs comprenant un mélange substantiellement homogène d'un polymère thermoplastique et d'au moins une charge inerte, caractérisé en ce que la charge inerte est choisie parmi le groupe constitué de la silice pyrogène, de la silice précipitée, du dioxyde de titane, du carbonate de magnésium, de l'oxyde de magnésium, de l'hydroxyde de magnésium ou de leurs mélanges et en ce que le séparateur présente une porosité volumique d'au moins 75% et une taille de pores d'extraction supérieure à 2 microns. Le séparateur de la présente invention comprend moins de 18% en volume de silice pyrogène.

Par rapport aux séparateurs existants, le nouveau séparateur permet un déplacement d'acide et une résistance électrique très largement réduits, ainsi qu'un transfert d'oxygène optimisé. Ces deux caractéristiques le rendent particulièrement performant dans les batteries à recombinaison de gaz à électrolyte gélifié.

Suivant un mode de réalisation avantageux, pour les séparateurs ne comportant pas de nervures, la porosité volumique est supérieure à 78% et la taille des pores d'extraction est supérieure à 2,2 microns. On arrive ainsi à obtenir des volumes de pores pour des séparateurs plats (non ondulés) qui sont équivalents voir supérieurs à ceux que l'on obtenait pour des séparateurs classiques ondulés, réalisés sur base du brevet US 3,696,061.

Le séparateur est extrudé en une feuille parfaitement plate et absorbante, de façon à pouvoir stocker et maintenir l'électrolyte dans ses pores, tout en assurant un contact parfait entre la surface plane du séparateur et les plaques de polarité opposée.

Un des avantages d'un tel séparateur pour accumulateurs à recombinaison de gaz est qu'il présente une meilleure résistance à la compression et une résilience accrue par rapport aux séparateurs traditionnels en fibres de verre. Par ailleurs, la porosité volumique (supérieure à 75%), la capacité d'absorption d'acide (comprise entre 0,9 g/cm³ et 1,5 g/cm³), la distribution de taille des pores bimodale (une famille de pores entre 0,01 et 0,50 microns et une famille de pores entre 2 et 10 microns), confèrent au nouveau séparateur toutes les qualités requises pour permettre une bonne gestion du transfert des fluides (électrolyte et oxygène).

La demande de brevet internationale WO99/67831 décrit un séparateur microporeux pour batteries à base d'un mélange homogène d'une polyoléfine, d'une charge inerte à base de silice pyrogène et le cas échéant d'un agent plastifiant. Le séparateur contient une teneur en charge inerte comprise entre 60 et 82% en volume ramenée au matériau de séparateur massif dont au moins 20% en volume sont de la silice pyrogène.

Cependant, par rapport au séparateur polymère décrit dans le brevet WO 99/67831, la présente invention comporte deux avantages principaux: (i) des pores compris entre 2 et 10 microns pour un transfert d'oxygène optimisé (il convient de noter que tout risque de dendrite est écarté, malgré la taille relativement importante de cette catégorie de pores, étant donnée leur tortuosité), (ii) des coûts de production tout à fait abordables.

Un autre avantage d'un tel séparateur absorbant est qu'il présente une résistance aux forces de traction plus élevée que celle des séparateurs traditionnels en fibres de verre.

On peut employer de 0,5 à 5 parties et de préférence de 1 à 2 parties de charge par partie de résine thermoplastique.

Le polymère est choisi de préférence parmi le groupe constitué du PVC, du polyéthylène, du polypropylène et des polymères acryliques.

Le PVC commercialisé sous la dénomination « Norvinyl » par la société Hydropolymners Nordic est particulièrement approprié pour l'application.

Le séparateur comprend de préférence entre 30 et 70% de pores fins ayant un diamètre < 1 µm et entre 30 et 70% de pores d'extraction ayant un diamètre > 2µm.

Le diamètre des pores fins est compris de préférence entre 0,02 et 0,40, tandis que le diamètre des pores grossiers est compris entre 2 et 10 µm.

Un avantage d'un tel séparateur réside dans la répartition entre les pores fins et les pores plus grossiers qui sont obtenus lors de l'extraction des solvants. Cette distribution entre pores fins et pores plus grossiers permet d'avoir une quantité et une hauteur d'absorption de l'électrolyte avantageuse. En plus, cette distribution de la taille des pores permet d'obtenir une circulation contrôlée de l'oxygène tout en minimisant ou en évitant la pénétration de dendrites, grâce à leur tortuosité.

Les séparateurs selon WO99/67831 ne présentent que peu ou pas de pores grossiers.

Dans une réalisation préférée de l'invention, le séparateur comprend entre 0, 1 % et 5 % en poids d'eau et entre 0,01% et 0,5% en poids de cyclohexanone.

Les séparateur peut comprendre en outre des additifs tel que le sulfate de plomb ou l'huile de soja epoxydée et/ou des plastifiants comme p.ex. le dioctylphtalate.

On peut p.ex. ajouter entre 0,1 % et 5% en poids rapporté à la charge de noir de carbone en tant qu'agent de coloration.

Afin d'améliorer la longévité de la batterie, il est avantageux d'incorporer dans le séparateur un capteur de métaux. Un capteur d'ions métalliques particulièrement avantageux est commercialisé sous la dénomination ES-A4 par la société Ensci Inc de Pismo Beach, Californie CA 93448, USA.

Dans une autre exécution avantageuse et en vue d'une utilisation dans les batteries gel, le séparateur comprend des arrêtes ou nervures sur au moins une face. Ces nervures ont généralement une hauteur comprise entre 2 et 6 mm, la distance entre deux arrêtes voisines est, de préférence, comprise entre 1 et 15 mm. L'épaisseur à la base des arrêtes se situe normalement dans le gamme de 0,3 à 1,0 mm. En sachant que l'épaisseur des séparateurs plats se situe entre environ 0,2 et environ 1,0 mm, les arrêtes sur au moins une des faces du séparateur permettent de pouvoir les utiliser dans des batteries de type acide gélifié qui nécessitent des épaisseurs plus importantes. La présence de nervures sur une ou sur deux faces réduit quelque peu la porosité du séparateur.

Alternativement, on peut déformer ou « corruguer » le séparateur plat p.ex. par gaufrage ou un autre procédé adapté pour obtenir un séparateur qui est sous forme d'une feuille présentant des ondulations. Cette opération de « corrugation » a pour effet bénéfique d'augmenter encore la porosité volumique du séparateur plat initial. Par exemple, un séparateur plat de porosité volumique de 79,4%, aura une porosité volumique de 81,5% après avoir été ondulé pour atteindre une épaisseur finale de 1,60 mm.

Le séparateur, s'il est ondulé ou extrudé avec des nervures, constitue un séparateur particulièrement performant dans les batteries à recombinaison de gaz à électrolyte gélifié. En effet, par rapport aux séparateurs existants, le nouveau séparateur permet un déplacement d'acide et une résistance électrique très largement réduits, ainsi qu'un transfert d'oxygène optimisé.

Pour une application dans des batteries de type AGM (Absorbtive Glass Mat), il est obligatoire d'utiliser des séparateurs plats. Une feuille plate obtenue selon le procédé décrit dans la présente invention pourra être utilisée telle qu'elle. Par rapport à un séparateur plat de 0,65 mm d'épaisseur fabriqué selon le procédé décrit dans le brevet US 3,696,061, et dont la taille des pores est inférieure à 2 microns et la porosité volumique est de l'ordre de 67% à 70%, un séparateur plat de 0,65 mm d'épaisseur préparé selon la présente invention aura une porosité volumique de par exemple 79,4%, avec 50% de pores d'extraction de taille comprise entre 2 microns et 10 microns.

Selon un autre aspect de la présente invention , on propose également un procédé de fabrication d'un séparateur absorbant pour accumulateurs comprenant les étapes suivantes :
a) formation d'un mélange poudreux comprenant une résine thermoplastique et au moins une charge minérale sèche ayant des pores,
b) ajout d'un premier solvant de sorte à ce que le premier solvant soit absorbé dans les pores de la charge minérale,
c) ajout d'un deuxième liquide de sorte à déplacer au moins partiellement le premier solvant des pores de la charge minérale pour former une poudre humide pouvant s'écouler librement.
d) formation d'un séparateur brut par extrusion et calandrage,
e) extraction en phase liquide du solvant primaire du séparateur brut pour former un séparateur absorbant.
f) déformation éventuelle pour former un séparateur corrugué pour une utilisation dans les batteries gel.

Selon l'utilisation envisagée, les rouleaux de calendre seront choisis de façon à façonner :
- soit un séparateur à nervures pour une utilisation dans les batteries gel,
- soit un séparateur plat constituant la base du séparateur ondulé pour batteries gel,
- soit un séparateur plat utilisé tel quel dans les batteries AGM

Il est important de souligner que pendant le mélange (étapes a) à c)), on évite la fonte du mélange ou la formation d'une pâte.

Le mélange poudreux ainsi formé est stable et peut soit être stocké (de préférence dans des containers hermétiques pour éviter l'évaporation des solvants), soit transformé directement en un séparateur. Cette transformation peut se faire par extrusion et calandrage ou par un autre procédé approprié.

Le premier solvant, déplacé au moins partiellement de la charge, contribue à plastifier le mélange de sorte que l'on puisse former le séparateur brut.

Une fois le séparateur brut formé, les solvants en sont extraits par un passage dans un bain liquide. Pendant cette étape, les pores d'extraction sont crées. Après l'extraction du (des) solvant(s), le séparateur est séché et les pores de la charge sont libérés.

Le choix et la quantité du solvant dépendent de la résine employée. Par exemple, dans le cas des polymères de chlorure de vinyle, on utilise de préférence des cétones comme premier solvant. Lorsqu'on utilise du polystyrène, le premier solvant peut être un hydrocarbure aromatique tel que le benzène ou le xylène, un hydrocarbure chloré tel que le méthylchloroforme ou un ester tel que l'acétate d'éthyle. Les polyoléfines tels que le polyéthylène ou le polypropylène ou leur copolymères peuvent être dissoutes ou solvatées par des solvants tels que le dichlorure d'éthylène, le trichloréthylène ou le tetrachlorure de méthyle (CCl₄).

Comme le solvant doit être extrait du séparateur brut et qu'en même temps la perte par évaporation doit être minimisée, il est souhaitable que ce solvant soit relativement peu volatil. Il est préférable qu'il ait un point d'ébullition d'au moins 120°C et qu'il puisse être extrait relativement aisément avec de l'eau ou un autre solvant secondaire relativement peu coûteux et relativement volatil qui en plus ne solvate pas ou peu la résine ou la charge poreuse employée.

Le premier solvant peut être choisi dans le groupe constitué par la cyclohexanone, la méthyléthylcétone, la tétrahydrofurane, la phorone (diisopropylidène-acétone), l'acétate de méthyle et leurs mélanges et le deuxième solvant est, en général, l'eau.

Le premier solvant est ajouté à une proportion qui est inférieure au taux de saturation du mélange de polymère et de la charge. Cette proportion de premier solvant que l'on peut ajouter au mélange dépend de plusieurs facteurs, notamment du polymère, de la charge, de sa quantité et de sa capacité d'absorption. Elle dépend également de facteurs qui sont liés au type de mélangeur utilisé, à la vitesse et à la température pendant le mélange. La quantité totale du premier solvant est choisie pour que celui-ci soit substantiellement entièrement absorbé par la charge dans les conditions d'opération choisies.

Si la proportion du premier solvant est trop importante, on assiste à la formation locale d'une pâte due à la solubilisation locale du polymère par le premier solvant.

Afin d'optimiser l'incorporation du premier solvant, on l'ajoute de préférence sous forme d'un brouillard et sur une période supérieure ou égale à 40 minutes.

Après l'incorporation du premier solvant, un temps de repos de 20 minutes est nécessaire avant l'ajout du deuxième solvant. Ensuite seulement le deuxième liquide, en général de l'eau, est ajouté au mélange. Le deuxième liquide est de préférence également ajouté sous forme d'un brouillard. Le deuxième solvant est également absorbé par la charge.

Après la formation du séparateur brut, il doit être transporté dans le milieu d'extraction dans des conditions telles que la quantité du premier et deuxième solvant qui s'évapore avant son immersion dans le milieu d'extraction soit minimisée.

Lors de l'étape d'extraction, le milieu d'extraction est maintenu à une température voisine ou, de préférence, supérieure à la température utilisée dans les étapes précédentes.

Par exemple, si, lors de l'étape de formation, la température du mélange est inférieure à environ 70° C et si le séparateur brut est formé à peu près à cette température, le liquide d'extraction est avantageusement maintenu à une température supérieure d'environ 5 à 20° C à la température de formation, mais sensiblement inférieure au point d'ébullition du liquide d'extraction et des solvants mis en oeuvre. En général le bain d'extraction est maintenu à une température comprise entre 72,5°C et 75,5°C. Il a été trouvé de manière surprenante que la température du bain d'extraction à proximité de la calendre est importante pour réaliser la porosité souhaitée. En effet, la température du bain à l'endroit où la feuille est introduite doit être contrôlée avec précision et il faut veiller à minimiser les écarts de température. Une température trop élevée ou trop basse ou des variations de température trop importantes ont un effet négatif sur la porosité du séparateur.

En maintenant le bain d'extraction à cette température élevée, des tensions qui peuvent être préalablement créées dans la feuille extrudée ou calandrée, sont détendues et le solvant primaire y est remplacé par le solvant secondaire sans introduire aucune nouvelle tension, réduisant ainsi le retrait au minimum, tout en atteignant une porosité finale maximale.

Dans la présente invention, le retrait est réduit au minimum et on obtient la microporosité désirée. Cette porosité est obtenue lorsque le solvant primaire qui est extrait de la feuille plastique et remplacé dans la feuille par le liquide d'extraction. Par exemple, bien que, dans une forme de réalisation typique, le solvant organique puisse constituer 20 à 30 % en volume de la pâte, lors de son élimination par extraction du séparateur brut, le volume total du séparateur subira un retrait relativement faible, habituellement d'environ 10% ou moins. C'est ainsi que, contrairement au cas de l'élimination du solvant par évaporation, l'élimination du solvant primaire par extraction ne laisse aucun volume libre pour le rétrécissement de la masse résineuse déplastifiée.

Il est important de noter que les conditions de température pendant l'extraction doivent être contrôlées étroitement pour obtenir une formation reproductible de pores d'extraction. Les conditions de température et d'autres paramètres du bain d'extraction ont un effet important sur la taille, le nombre et la répartition des pores d'extraction.

La teneur en solvant organique du bain d'extraction est, de préférence, maintenue aussi faible que possible. On peut réduire la concentration du solvant dans le bain par une distillation en continu du solvant.

Au fur et à mesure de l'extraction du solvant organique du séparateur brut, le solvant primaire est remplacé par l'eau et le séparateur est déplastifié et se raidit. Le séparateur est ensuite séché.

Les exemples repris ci-dessous montrent que les nouveaux séparateurs (nom commercial Amersorb) présentent une porosité nettement supérieure à celle des séparateurs qui sont actuellement sur le marché. A cause de la porosité supérieure, la résistance électrique et le déplacement d'acide sont nettement inférieurs.

Les méthodes employées pour déterminer les caractéristiques des séparateurs sont :
1. Epaisseur du Backweb BCI TM 3.203 respectivement Amer-sil PT-CQ-P07 ;
2. Méthode de détermination de la porosité volumique et de l'humidité d'un séparateur pour batteries BCI TM-3.207 respectivement Amer-sil PT-CQ-P08 (PT-CQ-P21) ;
3. Caractéristiques de la taille des pores pour séparateurs microporeux : BCI TM3.208 respectivement Amer-sil PT-CQ-P03,
4. Méthode pour déterminer la résistance électrique de séparateurs de batteries BCI TM3.218 respectivement Amer-sil PT-CQ-P09
5. Déplacement d'acide des séparateurs : Amer-sil PT- CQ-P15
6. Mesure du poids par surface des séparateurs : Amer-sil PT CQ-P10

### Exemple 1 : Séparateurs à nervures (valeurs typiques) :

| | Ancien DC340 | Amersorb DC340 |
|---|---|---|
| Epaisseur (mm) | 3,40 | 3,40 |
| Backweb (mm) | 0,60 | 0,60 |
| Porosité volumique (%) | 68,0 | 75,8 |
| Taille des pores fins (µm) | 0,04 | 0,04 |
| Taille des pores d'extraction (µm) | 1,5 | 2,8 |
| Résistance électrique (mΩ.cm²) | 225 | 120 |
| Déplacement d'acide (ml/m²) | 320 | 273 |

### Exemple 2 : Séparateurs plats (valeurs typiques) :

| | Ancien FF060 | Amersorb FF060 | Ancien CF075 | Amersorb CF075 |
|---|---|---|---|---|
| Epaisseur (mm) | 0,60 | 0,60 | 0,75 | 0,75 |
| Grammage (g/m²) | 278 | 260 | 370 | 298 |
| Porosité volumique (%) | 69,0 | 79,4 | 67,9 | 78,1 |
| Taille des pores fins (µm) | 0,05 | 0,05 | 0,05 | 0,05 |
| Taille des pores d'extraction (µm) | 1,5 | 6,5 | 1,3 | 7,2 |
| Résistance électrique (mΩ.cm²) | 118 | 55 | 178 | 75 |
| Déplacement d'acide (ml/m²) | 165 | 150 | 223 | 168 |

### Exemple 3 : Séparateurs ondulés (= corrugués) (valeurs typiques) :

| | Ancien SK160 | Amersorb SK160 |
|---|---|---|
| Epaisseur (mm) | 1,60 | 1,60 |
| Grammage (g/m²) | 304 | 237 |
| Porosité volumique (%) | 73,9 | 81,5 |
| Taille des pores fins (µm) | 0,05 | 0,05 |
| Taille des pores d'extraction (µm) | 3,2 | 9,5 |
| Résistance électrique (mΩ.cm²) | 75 | 50 |
| Déplacement d'acide (ml/m²) | 182 | 134 |

## Revendications

1. Séparateur absorbant pour accumulateurs comprenant un mélange substantiellement homogène d'un polymère thermoplastique et d'au moins une charge inerte, la charge inerte étant choisie parmi le groupe constitué de la silice pyrogène, de la silice précipitée, du dioxyde de titane, du carbonate de magnésium, de l'oxyde de magnésium, de l'hydroxyde de magnésium ou de leurs mélanges, le séparateur présentant une porosité volumique d'au moins 75% et une taille de pores d'extraction supérieure à 2 microns, **caractérisé en ce qu'**il comprend moins de 18% en volume de silice pyrogène.

2. Séparateur selon la revendication 1, **caractérisé en ce que** la charge inerte représente entre 0,7 et 2,5 fois le poids du polymère thermoplastique.

3. Séparateur selon l'une quelconque des revendications précédentes, **caractérisé en ce que** le polymère est choisi parmi le groupe constitué du PVC, du polyéthylène, du polypropylène et de polymères acryliques.

4. Séparateur selon l'une quelconque des revendications précédentes, **caractérisé en ce que** le polymère est le PVC.

5. Séparateur selon l'une quelconque des revendications précédentes, **caractérisé en ce qu'**il comprend entre 30 et 70% de pores fins ayant un diamètre < 1 µm et entre 30 et 70% de pores d'extraction ayant un diamètre > 2 µm.

6. Séparateur selon l'une quelconque des revendications précédentes, **caractérisé en ce qu'**il comprend entre 0,1% et 5% en poids d'eau et entre 0,01 % et 0,5% en poids de cyclohexanone.

7. Séparateur selon l'une quelconque des revendications précédentes, **caractérisé en ce qu'**il comprend en outre jusqu'à 30% en poids d'un plastifiant.

8. Séparateur selon l'une quelconque des revendications précédentes, **caractérisé en ce qu'**il comprend en outre entre 1% et 8% en poids d'un capteur d'ions métalliques.

9. Séparateur selon l'une quelconque des revendications précédentes, **caractérisé en ce qu'**il comprend des nervures.

10. Séparateur selon l'une quelconque des revendications 1 à 8, **caractérisé en ce qu'**il est sous forme d'une feuille présentant des ondulations.

11. Procédé de fabrication d'un séparateur absorbant pour accumulateurs, comprenant les étapes suivantes:
a) formation d'un mélange poudreux comprenant une résine thermoplastique et au moins une charge minérale sèche ayant des pores,
b) ajout d'un premier solvant de sorte à ce que le premier solvant soit absorbé dans les pores de la charge minérale,
c) ajout d'un deuxième solvant de sorte à déplacer le premier solvant des pores de la charge minérale,
d) formation d'un séparateur brut par extrusion et calandrage,
e) extraction en phase liquide des solvants pour former un séparateur absorbant,
f) déformation optionnelle du séparateur plat afin d'obtenir un séparateur ondulé,
**caractérisé en ce que** la température de l'étape e) est maintenue à une température voisine ou de préférence supérieure de 5 °C à 20 °C à la température de l'étape d).

12. Procédé selon la revendication 11, **caractérisé en ce que** le premier solvant est choisi dans le groupe constitué par la cyclohexanone, la méthyléthylcétone, le tétrahydrofurane, l'acétate de méthyle et leurs mélanges et le deuxième solvant est l'eau.

## Claims

1. An absorbent battery separator comprising a substantially homogeneous blend of a thermoplastic polymer and of at least one inert filler, the inert filler being chosen from the group consisting of pyrogenic silica, precipitated silica, titanium dioxide, magnesium carbonate, magnesium oxide and magnesium hydroxide, or mixtures thereof, the separator having a volume porosity of at least 75% and an extraction pore size of greater than 2 microns, **characterized in that** it contains less than 18% pyrogenic silica by volume.

2. The separator as claimed in claim 1, **characterized in that** the inert filler represents between 0.7 and 2.5 times the weight of the thermoplastic polymer.

3. The separator as claimed in either of the preceding claims, **characterized in that** the polymer is chosen from the group consisting of PVC, polyethylene, polypropylene and acrylic polymers.

4. The separator as claimed in any one of the preceding claims, **characterized in that** the polymer is PVC.

5. The separator as claimed in any one of the preceding claims, **characterized in that** it comprises between 30 and 70% of fine pores having a diameter of less than 1 µm and between 30 and 70% of extraction pores having a diameter of greater than 2 µm.

6. The separator as claimed in any one of the preceding claims, **characterized in that** it comprises between 0.1% and 5% by weight of water and between 0.01% and 0.5% by weight of cyclohexanone.

7. The separator as claimed in any one of the preceding claims, **characterized in that** it furthermore comprises up to 30% by weight of a plasticizer.

8. The separator as claimed in any one of the preceding claims, **characterized in that** it furthermore comprises between 1% and 8% by weight of a metal ion capturing agent.

9. The separator as claimed in any one of the preceding claims, **characterized in that** it comprises ribs.

10. The separator as claimed in any one of claims 1 to 8, **characterized in that** it is in the form of a sheet having corrugations.

11. A process for manufacturing an absorbent battery separator, comprising the following steps:
a) formation of a powder blend comprising a thermoplastic resin and at least one dry mineral filler having pores;
b) addition of a first solvent so that the first solvent is absorbed in the pores of the mineral filler;
c) addition of a second solvent so as to displace the first solvent from the pores of the mineral filler;
d) formation of a raw separator by extrusion and calendering;
e) liquid phase extraction of the solvents in order to form an absorbent separator; and
f) optional deformation of the flat separator so as to obtain a corrugated separator;
**characterized in that** the temperature in step e) is maintained close to, or preferably greater than 5°C to 20°C, the temperature in step d).

12. The process as claimed in claim 11, **characterized in that** the first solvent is chosen from the group consisting of cyclohexanone, methyl ethyl ketone, tetrahydrofuran, methyl acetate and mixtures thereof, and the second solvent is water.

## Patentansprüche

1. Absorbierender Separator für Akkumulatoren, der eine im Wesentlichen homogene Mischung eines thermoplastischen Polymers und wenigstens eines inaktiven Füllstoffes enthält, wobei der inaktive Füllstoff aus der Gruppe gewählt wird, die besteht aus pyrogener Kieselsäure, gefällter Kieselsäure, Titandioxid, Magnesiumcarbonat, Magnesiumoxid, Magnesiumhydroxid oder deren Mischungen, wobei der Separator eine Volumenporosität von wenigstens 75 % und eine Extraktionsporengröße von größer als 2 Mikrometer aufweist, **dadurch gekennzeichnet, dass** er weniger als 18 Volumen-% pyrogener Kieselsäure enthält.

2. Separator nach Anspruch 1, **dadurch gekennzeichnet, dass** der inaktive Füllstoff zwischen 0,7 und 2,5 mal das Gewicht des thermoplastischen Polymers repräsentiert.

3. Separator nach einem der vorangehenden Ansprüche, **dadurch gekennzeichnet, dass** das Polymer aus der Gruppe gewählt wird, die besteht aus PVC, Polyethylen, Polypropylen und Acrylpolymeren.

4. Separator nach einem der vorangehenden Ansprüche, **dadurch gekennzeichnet, dass** das Polymer PVC ist.

5. Separator nach einem der vorangehenden Ansprüche, **dadurch gekennzeichnet, dass** er zwischen 30 und 70 % feine Poren mit einem Durchmesser < 1 µm und zwischen 30 und 70 % Extraktionsporen mit einem Durchmesser > 2 µm enthält.

6. Separator nach einem der vorangehenden Ansprüche, **dadurch gekennzeichnet, dass** er zwischen 0,1 und 5 Gewichts-% Wasser und zwischen 0,01 und 0,5 Gewichts-% Cyclohexanon enthält.

7. Separator nach einem der vorangehenden Ansprüche, **dadurch gekennzeichnet, dass** er außerdem bis zu 30 Gewichts-% eines Weichmachers enthält.

8. Separator nach einem der vorangehenden Ansprüche, **dadurch gekennzeichnet, dass** er außerdem zwischen 1 und 8 Gewichts-% eines Metallionen-Aufnahmemittels enthält.

9. Separator nach einem der vorangehenden Ansprüche, **dadurch gekennzeichnet, dass** er Rippen umfasst.

10. Separator nach einem der Ansprüche 1 bis 8, **dadurch gekennzeichnet, dass** er die Form einer Folie mit Wellen aufweist.

11. Fertigungsverfahren für einen absorbierenden Separator für Akkumulatoren, das die folgenden Schritte umfasst:
a) Herstellen einer pulvrigen Mischung, die ein thermoplastisches Harz und wenigstens einen trockenen mineralischen Füllstoff enthält, der Poren aufweist;
b) Zugabe eines ersten Lösungsmittels, so dass das erste Lösungsmittel in den Poren des mineralischen Füllstoffes absorbiert wird;
c) Zugabe eines zweiten Lösungsmittels, so dass das erste Lösungsmittel aus den Poren des mineralischen Füllstoffes verdrängt wird;
d) Herstellen eines Rohseparators durch Extrudieren und Kalandrieren;
e) Extraktion in flüssiger Phase der Lösungsmittel zum Herstellen eines absorbierenden Separators;
f) Optionales Umformen des flachen Separators, um einen gewellten Separator zu erhalten;
**dadurch gekennzeichnet, dass** die Temperatur des Schrittes e) auf einer benachbarten oder vorzugsweise 5 °C bis 20 °C höheren Temperatur als jene des Schrittes d) gehalten wird.

12. Verfahren nach Anspruch 11, **dadurch gekennzeichnet, dass** das erste Lösungsmittel aus der Gruppe gewählt wird, die aus Cyclohexanon, Methylethylketon, Tetrahydrofuran, Methylacetat und deren Mischungen besteht und dass das zweite Lösungsmittel Wasser ist.
